# EUROPEAN PATENT APPLICATION

(11) **EP 3 702 966 A1**
(43) Date of publication of application: **02.09.2020**
(21) Application number: 17929885.6
(22) Date of filing: 27.10.2017
(51) Int. Cl.: G06K 9/62, G06T 7/00, B07C 5/10, B07C 5/342, G01N 21/55

(54) **AUTOMATION SYSTEM AND METHOD FOR SORTING RETURNABLE RACKS**

(71) Applicant: PRONUTRA DO BRASIL COM E IND LTDA., 88133-427 Palhoça, SC (BR)
(72) Inventor: VETTORAZZI, Leandro, 93320-250 Porto Alegre, RS (BR)
(74) Representative: do Nascimento Gomes, Rui
(86) International application number: PCT/BR2017/050325
(87) International publication number: WO 2019/079867

(57) **Abstract**

An automation system and method for screening returnable hangers at a distribution center is provided, allowing separation of items according to previously defined categories at the control unit, organizing said items for return to the production cycle and/or for discard, said system comprising an initial area for hanger flow entrance and physical separation of items (Aing) followed by a hanger image recording area (Areg), a hanger screening area (Atr) and a package storage area (Aac), the movement of the hangers (200) serially carried out through conveyor belts that ensure a linear and continuous flow.

## Description

### FIELD OF THE INVENTION

This invention describes an automation system and method for screening returnable hangers. More specifically it comprises a system and method that enables the management of returnable hangers in a distribution center, allowing separation of items according to previously defined categories at the control unit, organizing said items to return to the production cycle and/or for discarding.

### BACKGROUND OF THE INVENTION

Reverse logistics is a field of business logistics concerned with equating the multiple logistics aspects of the return to production cycle of the different types of industrial goods, the constituent materials thereof and industrial residues, aggregating value in several aspects, such as economic, environmental, legal, logistic, corporate image, among others (LEITE, Paulo R. (2002) - Logística reversa: nova area da logística empresarial. Tecnologística, Year VII, No. 78, pp. 102-109).

The reverse flow may take place due to the return of post-sales goods - products with few or no use that may return to the business flow - and post-consumption goods - used products, durable or disposable, which may be reused, recycled or sent to final disposal (LEITE, Paulo R. (2000) - Canais de distribuição reversos - 8a parte. Tecnologística, Year VI, n. 61, pp. 60-67).

As for major department stores, the reverse hanger flow is an important operation. These inputs are usually returned to the suppliers, and must be classified in order to receive proper treatment - disposal or reuse (Rodrigues, Gisela Gonzaga. A logística reversa nos centros de distribuição de lojas de departamento. PUC-Rio. 23rd National Production Engineering Convention - Ouro Preto, MG, Brazil, Oct 21-24, 2003).

Normally, handling and screening of said items is done manually, sorted by model, and packaged in cardboard boxes. At distribution centers or at the logistics operator, hangers are transported on conveyor belts and sorted manually, where the hangers in use conditions are returned to the shops and those who are not in line with the quality standards required by clients are recycled.

However, this screening operation and evaluation of hanger model and conditions are merely visual and manual, so eventual flaws may cause serious issues when hanging clothes. For example, an invaluable and rather fragile hanger part is the hook, which, if rusted, causes damage to the clothes hanged, therefore, rendering the product improper for sale. Inspecting this item is key, as well as checking for fissures, breaks or soiling on the hanger structure, which may cause the item to be unsuitable for reuse.

Another issue is related to the storage of hangers in the exact amount to be sent to the distribution center, which must be equal to the amount of clothes released by the clothing supplier, ensuring all clothes are hanged for display at the point of sale.

Thus, the hanger is a key part in the logistics chain of clothing, as it enables the displaying of clothes are the point of sale, in proper presentation conditions. Furthermore, the amount of hangers required by major department stores imply constant reverse logistics operations which must be monitored in order to prevent shortage of hangers for displaying clothing or unsuitable hangers for a certain type of clothing, or even hangers that cause damage to clothes.

The state-of-the-art documents describe automatic "hanging" operations, in other words, displaying a certain type of clothing on a certain type of hanger.

Document CN103043414 describes an automatic hanger separation, suspension and transport system placed on a conveyor chain and a clothing feed shaft, with a code reader that ensures only one piece of clothing is hanged at each link of the connecting rod.

Document JPH03184655 describes a hanger placement and movement device, a separation device to hold the hangers individually separated, and a rotation device to lower the hanger when rotating the separation device and release the hanger with the separation device to fit it on a piece of clothing.

Document US5971131 describes a method that enables regrouping transported items to form treatment units, depending on item sizes, determining the maximum length of the units, feeding units into a space within a transfer span and, afterwards, transferring the unit within a discard range.

Document JPH069026 describes a handling system, automating suspension and removal of a hanger from a suspension trolley, with a bar to hang the hanger on the suspension trolley, in order to allow a hanger to pass by.

Document JPH06211327 describes a method for rationalizing a system in a production line of a sewing product and rationalize a handling system inside a retrieval and delivery center of a finished sewing product, automatizing the coupling and removal of a hanger, where hangers are hung from a suspension bar of a trolley, including a collection ramp which transfers the hanger to the outer section of the suspension trolley in a single stroke.

However, the state of the art neither describes nor suggests an automatic system and method to carry out the screening of hangers, as to select the items according to parameters defined in a single electronic control unit, ensuring that non-compliant items, flagged by the control unit from images obtained, are removed from the processing area, ensuring that only articles visually compliant are sent for packaging, in order to return hangers in suitable structural and visual conditions to the production cycle, sorted by models and in accurate amounts.

### DESCRIPTION OF THE DRAWINGS

Figure 1 features the schematic representation of the automation system for screening returnable hangers.

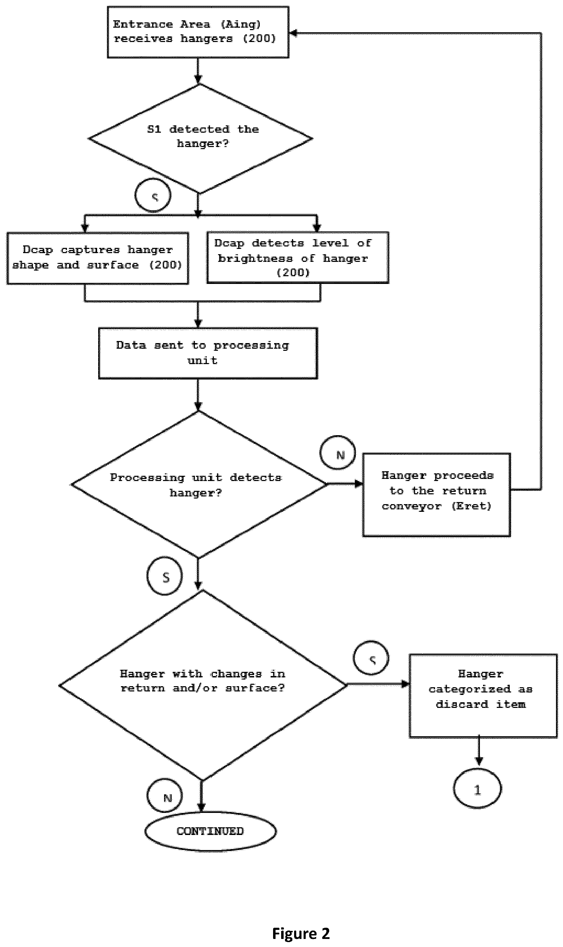

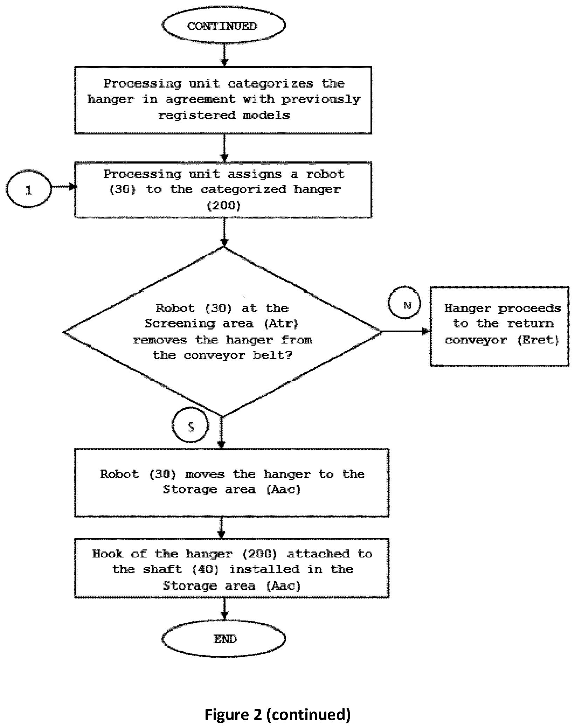

Figure 2 features the automated method for screening returnable hangers.

### DETAILED DESCRIPTION OF THE INVENTION

The automation system for screening returnable hangers, object of this invention, comprises an initial area for hanger flow entrance and physical separation of items (Aing) followed by a hanger image recording area (Areg), a hanger screening area (Atr) and a package storage area (Aac), with the movement of the hangers (200) serially carried out through conveyor belts that ensure a linear and continuous flow.

In the hanger flow entrance area (Aing), a first conveyor belt (10) is provided, preferably comprising an upward slope, said first conveyor belt (10) being responsible for moving the hanger flow (200).

Stoppers (101) are provided on the surface of the first conveyor belt (10) as retaining means for the hangers (200), providing physical separation of the items (200) and preventing overlapping, ensuring that each hanger (200) is kept entirely on the surface of the first conveyor belt (10) without any overlapping.

Serially to the first conveyor belt (10), a second conveyor belt (20) is provided at a higher speed than the first conveyor belt (10), so that the speed difference of the second conveyor belt (20) compared to the first conveyor belt (10) physically separates the hangers (200).

A hanger image recording area (Areg) is placed serially to the second conveyor belt (20) and features at least one sensor element (S1), which detects the hanger (200) on the surface of the conveyor belt, in order to activate a digital image capture device (Dcap).

The digital device (Dcap), preferably installed on the conveyor belt, records a picture of the hanger (200) and detects the level of brightness of the hanger surface that moves on the surface of the conveyor belt, said data related to shape, surface and brightness is sent to the processing unit (not represented).

The processing unit (not represented) analyzes the picture acquired by the digital device (Dcap) and retrieve attributes related to shape and brightness intensity that provide numerical data that enable classification of the hanger according to the previously registered models in the processing unit.

The shape analysis of the hanger (200) and comparison to the models registered at the processing unit enables categorization of the hangers, in addition to detecting variations in the hanger surface (200), which indicate possible fissures, breaks or soiling, classifying the hanger as a discard item.

The attributes registered at the processing unit generate classification sub-items that categorize the hangers, for instance, as A1 (hanger with superficial flaw), A2 (hanger with flaws in the metal hook), A3 (returnable X-model hanger), A4 (returnable Y-model hanger), An (returnable N-model hanger).

If the hanger shape features an equivalence related to the standard stored in the storage unit memory, the hanger is categorized, as exemplified above.

If the hanger shape or surface features difference related to the standard stored in the storage unit memory, the hanger is classified as a discard item.

If the level of brightness detected by the sensor (S2) is lower than the value registered at the processing unit database, the hanger (200) is classified as a discard item.

The analysis of the hanger surface brightness level allows to detect damages on the metallic surface of the hanger (200) hook, which is the most relevant part and that requires increased attention to the screening process, given the likelihood of oxidation, which renders the item unable to be reused. As for the brightness level being lower than the defined value at the processing unit, this is an indication of oxidation spots on the hook.

Optionally, pre-processing steps and/or a segmentation phase are provided to improve picture quality, where the picture is separated into sections of interest.

The hanger (200) properly categorized by the processing unit follows along the conveyor belt to the hanger screening area (Atr) where at least one parallel robot (30) is installed to take out the assigned hanger (200) from the conveyor belt surface and moves said hanger (200) to a storage area (Aac).

If two or more parallel robots (30) are used, each hanger (200) categorized by the processing unit is assigned to a specific robot (30).

Optionally, a same robot (30) may be assigned by the processing unit for screening several categories of hangers (200), so that each category is assigned to a device (40) at the storage area (Aac).

As known by those skilled in the art, a parallel robot (30) comprises a device driven by a processing unit and with mechanical elements that include linear barriers driven by engines that generate angular movement, so that the tool placed at the end of the linear bar allows attachment of the hanger (200) for movement between the surface of the conveyor belt of the hanger screening area (Atr) and the storage area (Aac).

The storage area (Aac) provides a device that includes a shaft (40), with the hanger hook (200) being attached to said shaft by the robot (30). The counting of hangers on the shaft (40) is verified through a sensor (S3) that allows accurate item counting. When the sensor (S3) identifies the storage of hangers (200) in the amount defined at the processing unit, the processing unit moves the device (40) and repositioning of an empty device (40), either automatically through movers, or through activation of visual and/or sound alerts for manual operation.

For the purposes of this invention, the robot (30) removes the hanger from the conveyor belt of the screening area (Atr) and performs an angular movement in order to position the hook of the hanger (200) on the shaft, said hook being placed with the opening facing any direction.

The hanger (200) that is not identified by the processing unit returns to the Entrance Area (Aing) - uncategorized hanger - through a return conveyor (Eret), passing through the Image Recording Area (Areg) for reprocessing.

One reason for non-identification of the hanger (200) by the processing unit may be a fault in shape detection motivated by overlapping hangers. In this case, the image recorded by the image capture device (Dcap) is unable to find a match in the processing unit database, so that the hanger (200) is released to the return conveyor (Eret).

Another reason for non-identification of the hanger (200) by the processing unit may be an error in image detection recorded by the image capture device (Dcap), so that the hanger (200) is released to the return conveyor (Eret).

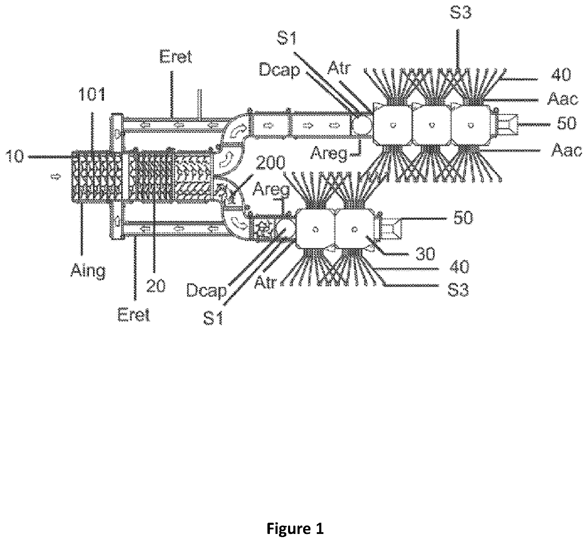

If the robot (30) does not retain the hanger (200) assigned to it, the hanger may be returned to the Entrance Area (Aing) for reprocessing or may be released in a container (50) located at the exit of the hanger screening area (Atr) such as presented in Figure 1.

If the number of hangers (200) assigned to a robot (30) is higher than the operational capacity of said robot (30), the processing unit may assign the command of removing hangers assigned to the first robot (30) to the second robot (30), or even release the hangers to the return conveyor (Eret).

## Claims

1. Automation system for screening returnable hangers, wherein it comprises:
a) an initial area for hanger flow entrance and physical separation (Aing), comprising a first conveyor belt (10), preferably with an upward slope, said first conveyor belt (10) moving the hanger flow (200) and featuring stoppers (101) on the surface, followed by a second conveyor belt (20) at a higher speed than the first conveyor belt (10);
b) a hanger image recording area (Areg) placed serially to the second conveyor belt (20), comprising at least a sensor element (S1) that detects the hanger (200) on the surface of the conveyor belt and activates a digital image capture device (Dcap) that records an image of the hanger (200) and detects the level of brightness of the hanger moving on the surface of the conveyor belt, said data related to the surface, shape and brightness of the hanger (200) to be sent to the processing unit (not represented) where the image is analyzed for categorization of the hangers (200) according to attributes previously registered;
c) a hanger screening area (Atr) where the hangers (200) categorized at the image recording area (Areg) are removed from the conveyor belt by a parallel robot (30) assigned by the processing unit and moved to the storage area (Aac);
d) a storage area (Aac) comprising a shaft (40) where the hook of the hanger (200) is attached by the robot (30), said shaft including a sensor (S3) that enables accurate item counting.

2. Automation method for screening returnable hangers, using the system according to claim 1, wherein it comprises the steps of:
a) positioning the returnable hangers on the surface of the first conveyor belt (10) of the area for hanger flow entrance and physical separation of items (Aing), including stoppers (101) for physical separation of items (200);
b) displacing hangers (200) to a second conveyor belt (20) at a higher speed than the first conveyor belt (10) to provide physical separation from the hangers (200);
c) detecting the hanger (200) on the surface of the conveyor belt by the sensor element (S1) that activates the digital image capture device (Dcap) installed at the hanger image recording area (Areg);
d) digital device (Dcap) records the hanger (200) picture and detects the level of brightness of the surface of the hanger (200) that moves on the surface of the conveyor belt, and said data related to shape, surface and brightness intensity is sent to the processing unit (not represented);
e) processing unit (not represented) analyzes the image acquired by the digital device (Dcap) and extracts attributes that provide numerical information that enable categorization of the hanger according to the models previously registered at the professing unit, upon detection of the shape and brightness level of the hanger (200);
f) if the hanger shape features an equivalence related to the standard stored in the storage unit memory, the hanger is categorized;
g) if the hanger shape or surface is different from the standard stored in the storage unit memory, the hanger is classified as a discard item.
h) if the level of brightness is lower than the value registered at the processing unit database, the hanger (200) is classified as a discard item;
i) the categorized hangers (200) are moved to the hanger screening area (Atr) where at least one parallel robot (30) is installed to take out the assigned hanger (200) from the conveyor belt surface and moves said hanger to a storage area (Aac);
j) a storage area (Aac), comprising a device that includes a shaft (40), where the hook of the hanger (200) is attached by the robot (30), said shaft including a sensor (S3) that enables item counting (200);
k) the hanger (200) not categorized by the processing unit returns to the Entrance Area (Aing) through a return conveyor (Eret).

3. Automation method for screening returnable hangers, according to claim 2, wherein it provides an image pre-processing step and/or a segmentation step for the image obtained by the digital image capture device (Dcap).

4. Automation method for screening returnable hangers, according to claim 2, wherein a robot (30) carries out the screening of several categories of hangers that are assigned to a device at the storage area (Aac).

5. Automation method for screening returnable hangers, according to claim 2, wherein the hanger (200) not selected by the assigned robot (30) returns to the Entrance Area (Aing) or is released in a container (50) provided at the exit of the hanger screening area (Atr).
